**Europäisches Patentamt**

**European Patent Office**

**Office européen des brevets**

(19)

(11) Veröffentlichungsnummer: **0 089 476**

**A2**

(12) **EUROPÄISCHE PATENTANMELDUNG**

(21) Anmeldenummer: **83101049.1**

(22) Anmeldetag: **04.02.83**

(51) Int. Cl.³: **C 06 D 5/00**

(30) Priorität: **23.03.82 DE 3210536**

(43) Veröffentlichungstag der Anmeldung:
**28.09.83 Patentblatt 83/39**

(84) Benannte Vertragsstaaten:
**FR GB IT**

(71) Anmelder: **Bayern-Chemie Gesellschaft für flugchemische Antriebe mit beschränkter Haftung**

**D-8261 Aschau a. Inn(DE)**

(72) Erfinder: **Gast, Eduard, Dr.**
**Marktplatz 27**
**D-8261 Kraiburg(DE)**

(72) Erfinder: **Semmler, Peter**
**Lärchenstrasse 16**
**D-8261 Aschau(DE)**

(54) **Verbundtreibsatz und Verfahren zu seiner Herstellung.**

(57) Feststoff-Verbundtreibsatz zur Gaserzeugung, insbesondere zur Verwendung in Raketenmotoren, aus mindestens zwei fest miteinander verbundenen Treibsätzen, wobei der eine Treibsatz aus einbasigem Treibstoff auf Nitrocellulose-Basis mit bis zu 50% Zusätzen und der andere Treibsatz aus Composit-Treibstoff besteht.

FIG. 1

**0089476**

BAYERN-CHEMIE
Gesellschaft für flugchemische Antriebe mbH
Aschau

Aschau, 16.o3.82
9177
Dr.D/fri/sz


Verbundtreibsatz und Verfahren zu seiner Herstellung


Die Erfindung betrifft einen Feststoff-Verbundtreibsatz, insbesondere zur Verwendung in Raketenmotoren, aus mindestens zwei fest miteinander verbundenen Treibsätzen.

Verbundtreibsätze, auch als DUAL-Treibsätze bezeichnet, deren vorwiegender Zweck darin besteht, eine der Missionsanforderung dienende Schubstufung, z.B. erhöhten oder verminderten Startschub, zu erreichen, sind bekannt. Derartige Treibsätze bestehen aus mindestens zwei Treibsätzen, deren Treibstoffe sich lediglich durch Modifikationen ihrer Rezeptur unterscheiden wie beispielsweise in einer Variation der Abbrandmoderatoren zur Erreichung bestimmter Eigenschaften, die in ihrem Grundtyp aber gleich sind, wie z.B. Composit-Treibstoffe.

In dem Bestreben, bei Raketenmotoren möglichst hohe Leistungen zu erreichen, werden heute zunehmend Composit-Treibstoffe verwendet, die - vor allem durch Metallbeimengungen wie Aluminium - diese Leistungsforderungen zu erfüllen vermögen. Ein zusätzlicher Vorteil dieser Treibstoffe liegt in ihren ausgezeichneten mechanischen Eigenschaften, die eine kammerhaftende Bauweise ermöglichen und damit zu einer höheren Ladedichte führen.

Die Anwendung solcher Festtreibstoffe wird jedoch eingeschränkt, weil die bei der Verbrennung entstehenden Abgase die Umwelt negativ beeinflussen. Dies sei an einem Beispiel verdeutlicht.

Bei Composit-Treibstoffen mit den Hauptbestandteilen Ammoniumperchlorat, Aluminium und Binder enthält das Abgas u.a. HCl und $Al_2O_3$-Partikel; außerdem tritt starke Rauchentwicklung auf. Durch HCl-Gas kann es zur Korrosion an den Abschußanlagen und zur toxischen Beeinflussung des Bedienungspersonals kommen. Die $Al_2O_3$-Partikel können Ablagerungen und Verschmutzungen oder Abtragungen an der Abschußeinrichtung und an den Trägersystemen verursachen.

Treibsätze, die aus doppel- oder einbasigen Treibstoffen (auf Nc/Ngl- bzw. Nc-Basis) bestehen, weisen diese Nachteile nicht auf, sind aber in ihrer Leistung geringer.

Der Erfindung liegt daher die Aufgabe zugrunde, für solche Fälle, in denen die oben erwähnten Auswirkungen nur bei einem Teil der Brennphase des Raketenmotors (z.B. in der Startphase) auftreten, eine Lösung vorzusehen.

Erfindungsgemäß wird ein Verbundtreibsatz vorgeschlagen, bei dem der eine Treibsatz aus einbasigem Treibstoff auf Nitrocellulose-Basis mit bis zu 5o% Zusätzen und der andere Treibsatz aus Composit-Treibstoff besteht.

Der Treibstoff auf Nitrocellulose-Basis ist so angeordnet, daß er in dem Teil der Brennphase des Raketenmotors abbrennt, in welchem die erwähnte negative Auswirkung auftreten kann; in den meisten Fällen trifft dies für die Startphase zu.

Bei der Abgasanalyse des Treibstoffs auf Nitrocellulose-Basis wurden folgende Werte in Mol-Prozent gefunden:

$$
\begin{array}{ll}
H_2 & 9,19 \\
N_2 & 11,79 \\
CO & 42,65 \\
CO_2 & 12,14 \\
H_2O & 23,98 \\
\hline
& 99,75
\end{array}
$$

Die Meßergebnisse zeigen, daß die oben erwähnten negativen Auswirkungen eines Composit-Treibstoffes hier nicht auftreten.

In der zweiten Brennphase des Raketenmotors wird der Composit-
Treibsatz wirksam.

Da der Teil der Brennphase, in welchem umweltschädigende Abgase
auftreten, - z.B. bei der Startphase - in der Regel nur einen
relativ kleinen Anteil an der Gesamtbrennzeit des Raketenmotors
besitzt, sind die höheren Leistungen des Composit-Treibstoffs
für den größten Teil der Wirkdungsdauer des Raketenmotors maßgebend.

Zur Erläuterung des erfindungsgemäßen Verbund-Treibsatzes dienen
die folgenden Beispiele:

Beispiel 1:

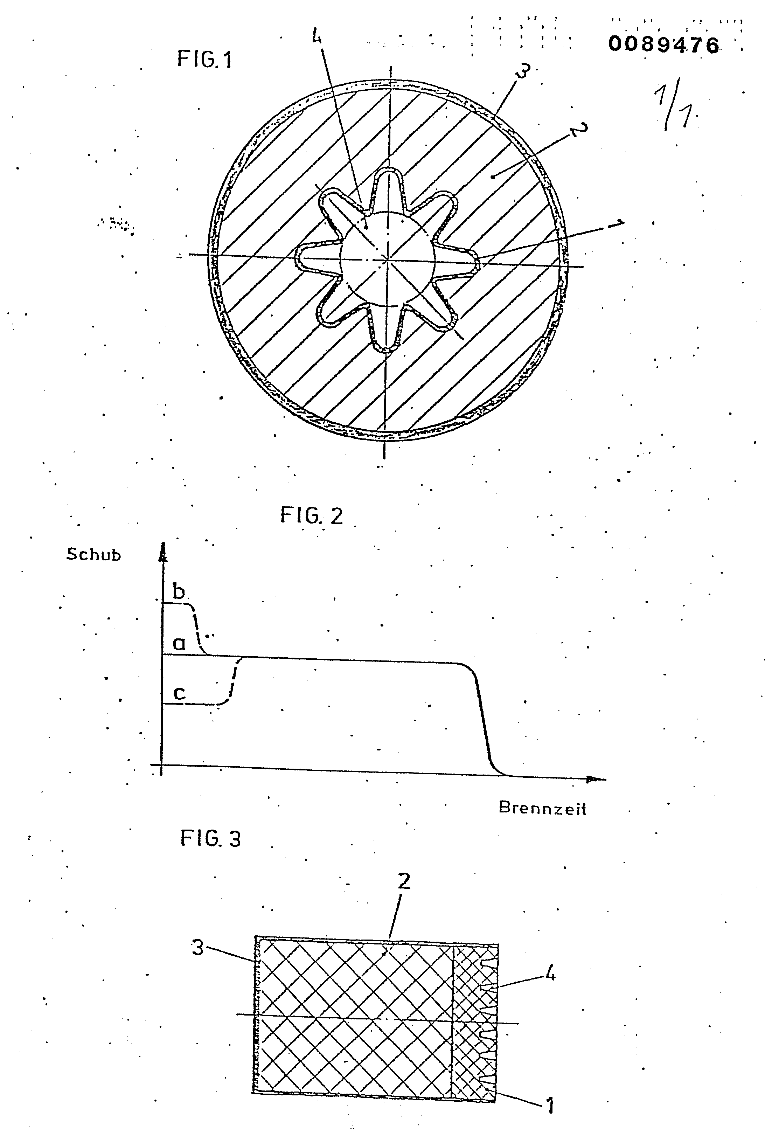

Der in Figur 1 dargestellte Verbund-Treibsatz mit der Konfiguration eines Sterninnenbrenners besteht aus dem inneren Treibsatz 1 für die erste Brennphase und dem äußeren Treibsatz 2 für
die zweite Brennphase. Der Verbund-Treibsatz ist an seinen Außenflächen mit einer Inhibierungsschicht 3 versehen und weist
einen freien Gaskanal 4 auf.

Der Treibsatz 1 besteht aus Festtreibstoff auf Nitrocellulos-
Basis, z.B. folgender Zusammensetzung:

| | |
|---|---|
| Nitrocellulose (13,2 % N) | 99 % |
| Diphenylamin | 1 % |

Bei dem Treibsatz 2 handelt es sich um einen üblichen Composit-
Treibsatz, z.B. folgender Zusammensetzung:

| | |
|---|---|
| Ammoniumperchlorat | 71 % |
| Aluminium Kl.II oder IV der MIL-Spezif. | 16 % |

Polybutadienbinder CTPB
bzw. HTPB und Härter                     13 %
Abbrandmoderatoren wie Cu-Chromit
oder Oxide der Nebengruppen-
Elemente                                 0,2 %

Durch Additive und Änderungen in der Zusammensetzung lassen sich die Abbrandeigenschaften des Treibstoffes für den Treibsatz 1 so variieren, daß die pro Zeiteinheit erzeugte Gasmenge gleich, größer oder kleiner als die des Treibsatzes 2 ist und somit für die erste Brennphase ein gleicher (a), größerer (b) oder kleinerer (c) Schub des Raketenmotors erzielt werden kann (Fig. 2).

Beispiel 2:

Der in Figur 3 dargestellte Verbundtreibsatz mit der Konfiguration eines Stirnbrenners besteht aus dem Treibsatz 1 für die erste Brennphase und dem Treibsatz 2 für die zweite Brennphase. Der Verbundtreibsatz ist an seiner Außen- und Endfläche mit einer Inhibierungsschicht 3 versehen.

Der Treibsatz 1 besteht aus Festtreibstoff auf Nitrocellulose-Basis, z.B. folgender Zusammensetzung:

Nitrocellulose (13,4 % N)      73 %
Kraftzellstoff                 18 %
Kunstharzbinder                 8 %
Stabilisator                    1 %

Der Treibsatz 2 ist in üblicher Composit-Treibstoff, z.B. folgender Zusammensetzung:

Ammoniumperchlorat             75 %
Aluminium                       9 %
Polybutadienbinder und Härter  13 %
Abbrandmoderatoren und
Weichmacher                     3 %

Durch Additive und Änderungen in der Zusammensetzung können die Abbrandeigenschaften des Treibstoffes für den Treibsatz 1 so gewählt werden, daß die pro Zeiteinheit erzeugte Gasmenge gleich, größer oder kleiner als die des Treibsatzes 2 ist und somit für die erste Brennzeit ein gleicher (a), größerer (b) oder kleinerer (c) Schub des Raketenmotors erzielt werden kann (Fig. 2).

Eine weitere Möglichkeit, die Anfangsphase hinsichtlich Schub und Brennzeit zu variieren, besteht in bekannter Weise in einer geeigneten Formgebung 4 des Treibsatzes 1 (z.B. konzentrische Rillen).

Zur Anpassung an die geforderte Leistung läßt sich die anfängliche Schubcharakteristik ferner durch eine Zusatzladung aus einbasigem Treibstoff - beispielsweise in Artilleriepulverform - in einem verbrennbaren Säckchen oder Container beeinflussen.

Weiterhin betrifft die Erfindung ein Verahren zur Herstellung des Feststoff-Verbundtreibsatzes. Dabei wird der aus einbasigem Treibstoff bestehende Treibsatz vorgefertigt und der Composit-Treibstoff an diesen angegossen.

Der Treibsatz aus einbaisgem Treibstoff wird in der Regel im Preß- oder Extrudierverfahren gefertigt. Der Composit-Treibsatz wird nach dem Gießverfahren hergestellt und an den vorgefertigten einbasigen Treibsatz angegossen. Im Falle einer Innenbrennerkonfiguration (Beispiel 1) kann bedingt durch den vorgefertigten einbasigen Treibsatz auf den sonst notwendigen Gießkern verzichtet werden; dadurch wird der Vorrichtungsaufwand bei Herstellung gegossener Composit-Treibsätze entscheidend verringert. Der vorgefertigte, einbasige Treibsatz kann dabei vorher in die Gießvorrichtung oder Brennkammer eingebaut und der Composit-Treibstoff anschließend gegossen oder aber nach dem Verdrängungsverfahren in den gegossenen Composit-Treibstoff eingebracht werden.

BAYERN-CHEMIE
Gesellschaft für flugchemische Antriebe mbH
Aschau

Aschau, 16.03.82
9177        0089476
Dr.D/fri/sz

−7−

**Verbundtreibsatz und Verfahren zu seiner Herstellung**

Patentansprüche

1. Feststoff-Verbundtreibsatz zur Gaserzeugung, insbesondere zur Verwendung in Raketenmotoren, aus mindestens zwei fest miteinander verbundenen Treibsätzen, dadurch g e k e n n - z e i c h n e t , daß der eine Treibsatz aus einbasigem Treibstoff auf Nitrocellulose-Basis mit bis zu 5o% Zusätzen und der andere Treibsatz aus Composit-Treibstoff besteht.

2. Verfahren zur Herstellung eines Feststoff-Verbundtreibsatzes gemäß Anspruch 1, dadurch g e k e n n z e i c h n e t , daß der aus einbasigem Treibstoff bestehende Treibsatz vorgefertigt und der Composit-Treibstoff an diesen angegossen wird.

FIG.1

FIG. 2

Schub

b

a

c

Brennzeit

FIG. 3